# EUROPEAN PATENT APPLICATION

(11) **EP 4 646 911 A1**
(43) Date of publication of application: **12.11.2025**
(21) Application number: 24174447.3
(22) Date of filing: 07.05.2024
(51) Int. Cl.: A01D 41/12, A01D 45/30

(54) **COMBINE HARVESTER WITH IMPROVED TANK UNLOADING SYSTEM**

(71) Applicant: CNH Industrial Belgium N.V., 8210 Zedelgem (BE)
(72) Inventor: Deleersnyder, Serge, 8210 Zedelgem (BE); Deruyter, Mathijs, 8210 Zedelgem (BE)
(74) Representative: CNH Industrial IP Department

(57) **Abstract**

The combine harvester comprises a grain tank (10) and one or more rotatable tank augers (13) mounted at the bottom of the tank. At least one of the augers is provided with a beam (25) mounted essentially parallel to the auger, and provided with tines (26) fixed to the beam and oriented transversely to the beam. The beam and the tines are positioned so that the tines are in physical contact with bulk material in the direct vicinity of the auger (13) when the tank is filled at least to a point where the one or more augers are covered with bulk material. The tank (10) further comprises a shaker device (31) coupled to the beam so that a vibration generated by the shaker device is transferred to the beam (25) and the tines (26). A kit of parts according to the invention enables to transform a conventional harvester into a harvester according to the invention.

## Description

### Field of the Invention

The present invention is related to agricultural harvesters, in particular to combine harvesters and to systems for unloading bulk harvested grains or seeds from the tank of a combine harvester.

### State of the art.

A combine harvester is used to cut or collect crops from a field and subsequently process the crops in order to separate grains or seeds from plant residue material. The combine harvester may be adapted to the type of crops that are being harvested. For harvesting light particles such as grass seeds, a grass seed pickup header may be coupled at the front of the harvester, and grass which has been previously cut and deposited on the field in the form of parallel swathes is picked up by this header. Inside the combine, the grass seeds are separated from the plant residue by threshing and sieving systems, collected in a trough at the bottom of the harvester, and thereafter transported to a grain tank higher up in the combine's structure.

From the grain tank, the harvested particles are transported through a pivotable spout to a collecting trailer that is towed by a tractor alongside the harvester. At the bottom of the tank, usually two parallel tank augers are installed for moving the particles in the direction of an unloading auger which transports the particles to the spout. These tank augers are often covered by cover plates, which enable grains at the bottom of the tank to be fed into the tank augers when the rotation of these augers is activated. While such tank unloading systems work well for unloading heavier grains, they are not so optimal when lighter particles have been collected in the tank, such as grass seeds. This lighter material may cause the so-called bridging phenomenon, by which the material becomes stuck above the tank augers so that these augers are incapable of transporting the material out of the tank. Such problems require a manual intervention in order to remove the bridging, leading to unwanted time loss as well as safety risks for the operator.

### Summary of the invention

The invention is related to a combine harvester and to a kit of parts as described in the appended claims. The present invention is thus related to a combine harvester comprising a grain tank and one or more rotatable tank augers mounted at the bottom of the tank. At least one of the augers is provided with a beam mounted essentially parallel to the auger, and provided with tines fixed to the beam and oriented transversely to the beam. The beam and the tines are positioned so that the tines are in physical contact with bulk harvested material in the direct vicinity of the auger when the tank is filled at least to a point where the one or more augers are covered with said bulk material. The tank further comprises a shaker device coupled to the beam provided with tines so that a vibration generated by the shaker device is transferred to the beam and the tines. When the tank is filled with grain-like material, especially with grain-like material formed of light particles such as grass seeds, this arrangement is capable of loosening bulk material that is stuck at the bottom of the tank due to bridging. A kit of parts according to the invention enables to transform a conventional harvester into a harvester according to the invention.

### Brief description of the figures

Figure 1 shows a schematic sideview of a combine harvester as known in the art, indicating a number of key components of the combine and in particular indicating the position of the tank and the tank augers.
Figure 2 is a conceptual 3D view of the tank augers provided with a shaker device in accordance with an embodiment of the invention.
Figure 3 shows the installation of the shaker device in more detail.
Figure 4 is a parallel projection side view of the auger arrangement of Figures 2 and 3.
Figure 5 is a simplified view of two supports on which the beam with tines is mounted.

### Detailed description of preferred embodiments of the invention

Preferred embodiments will now be described with reference to the drawings. The detailed description is not limiting the scope of the invention, which is defined only by the appended claims.

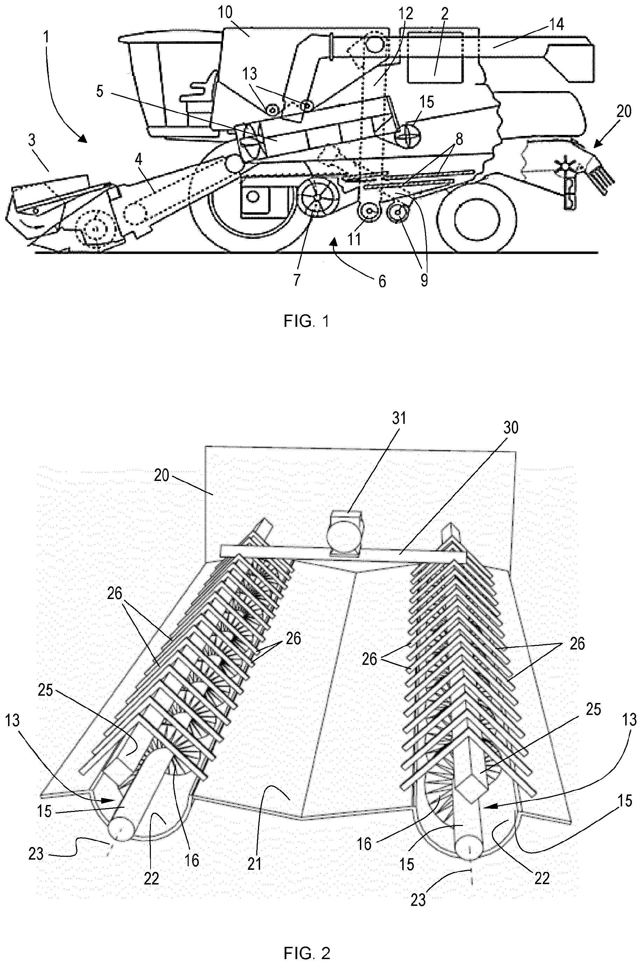

With reference to Figure 1, a combine harvester 1 as presently known in the art includes an engine 2, a header 3 for cutting or picking up crops from the field, and for gathering the crops towards the inlet of a feeder 4. The feeder 4 delivers the crops to one or two threshing rotors 5 which separate larger plant material from grains and smaller residue. The threshing rotors are oriented in the fore-aft direction of the harvester in the image but could also be oriented transversely. The cleaning section 6 of the harvester includes a blower 7 and a plurality of sieves 8 for separating grains from smaller residue. Insufficiently separated plant material is transported back to the threshing rotors via return augers 9. Fully separated grains are collected in a grain tank 10 through the combined action of a clean grain auger 11 and a grain elevator 12. From the tank 10, the grains may be evacuated from the harvester by the tank augers 13 at the bottom of the grain tank and through a pivotable spout 14.

As stated in the introduction, the tank augers 13 may be incapable of removing bulk material at the bottom of the tank due to the bridging phenomenon. This problem is most likely to occur when the bulk material consists of light particles such as grass seeds.

Figure 2 is a conceptual image of the bottom area of the grain tank in a combine harvester according to an embodiment of the invention. The two tank augers 13 are visible, as well as part of one sidewall 20 of the tank. The other sidewalls are not shown in order not to obscure significant features of the embodiment. The floor 21 of the tank is shown, including two throughs 22 underneath the respective augers 13. As in the prior art combine shown in Figure 1, the tank augers 13 are rotatable about central rotation axes 23 oriented transversely with respect to the fore-aft direction of the combine. When the tank is filled with grain or grain-like bulk material, this material is transported by the rotation of the augers 13 towards the sidewall 20, where it may be transferred to an unloading auger (not shown, but well known in the art). Each of the augers 13 comprises a rotation shaft 15 and helicoidal flights 16 wrapped around the shaft 15. The active length of the augers 13 is defined as the length comprising the helicoidal flights 16.

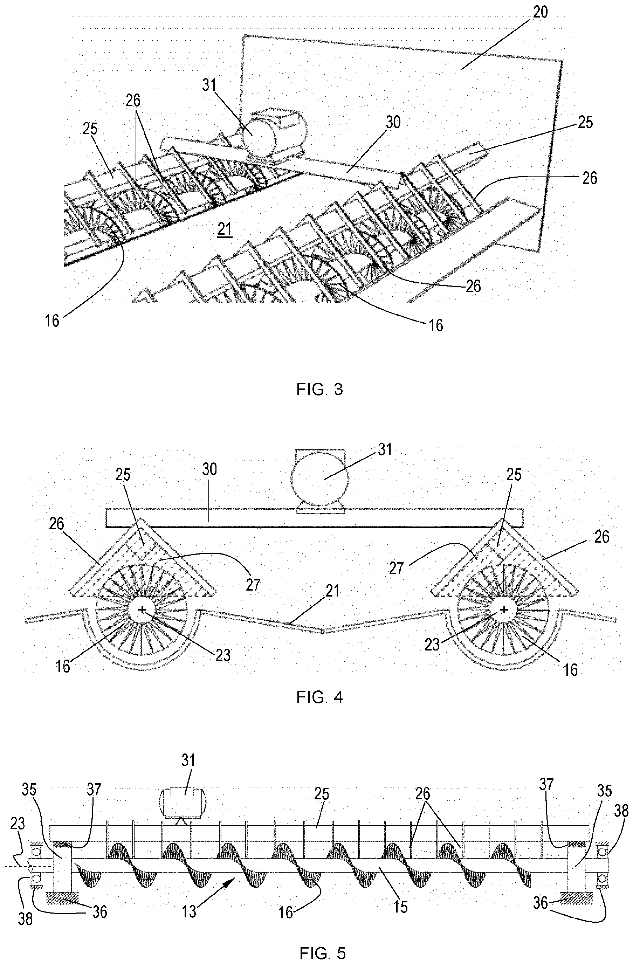

As seen in Figure 2 and in the detail view in Figure 3, a beam 25 is mounted above each of the tank augers 13 and oriented parallel to the respective rotation axes 23 of the augers. Multiple tines 26 are fixed to each of the beams 25 and extend outward from the beams in a direction transversal to the beams 25. In the embodiment shown, the tines 26 extend downward from the beam in two opposite directions, so that the tines on both sides of the beam are arranged symmetrically with respect to the beam 25. With reference to the parallel projection view in Figure 4, the tines 26 are oriented downward, so that their cross-section by a plane perpendicular to the rotation axis 23 of the auger 13 forms a roof-shape above the auger 13 with the circumference of the auger partially inserted in the surface area 27 (referring to the hatched triangle) of said roof shape. This is one way of realizing the tines 26 and the beam 25 so that the tines are in physical contact with bulk harvested material, for example grass seeds, in the vicinity of the auger 13 when the tank is filled at least to the point where the augers are covered by said bulk material.

An auxiliary beam 30 is furthermore fixed transversely between the two beams 25. This auxiliary beam 30 may be fixed to the beams 25 by screw connections (not shown), or welded thereto. Approximately in the centre of the auxiliary beam 30, a shaker device 31 is mounted. This may be an electric vibration motor known as such in the art, comprising an electric motor and an eccentric weight, and configured to generate a vibration in at least one direction. An example of a suitable shaker device is the model MVE 50 12 DC from OLI^{®}. Such an electric shaker device 31 may be powered by an electric power source of the combine. Preferably, the shaker device 31 is configured to generate at least a vibration in the direction perpendicular to the beams 25.

The vibration of the shaker device 31 is transferred to the beams 25 and the tines 26. As the tines are in physical contact with bulk material in the direct vicinity of the augers 13, material that is stuck due to bridging between the sidewalls of the tank is loosened by the vibration of the tines and subsequently falls into the troughs 22 so that it can be transported by the augers 13 towards an unloading auger.

The beams 25 are mounted on supports which are not shown in Figures 2 and 3 but which may be implemented according to any suitable shape adapted to the form of the tank and the combine as a whole. Figure 5 shows a side view of one auger 13 and the corresponding beam 25, with possible locations of the supports 35. The supports are fixed with respect to the tank walls. Preferably the supports 35 are mounted on the chassis of the harvester symbolized by the hatched areas 36 . The beams 25 are mounted on said supports 35, preferably with a damping element 37 such as a piece of rubber-like material mounted between the beam 25 and the supports. Figure 5 also indicates that the auger 13 is supported by suitable rotary bearings 38, which may be in accordance with prior art designs. This is true also for the actuation of the auger's rotation about its central rotation axis 23.

In the embodiment shown, the tines 26 on each beam 25 are regularly spaced from each other. Irregularly spaced tines are not excluded from the scope, but regular spacing between the tines is preferred. The spacing between adjacent tines may be smaller than shown in the drawings. A smaller spacing requires a larger number of tines, which is less economic, but which reduces the risk of injury for persons entering the tank, for example for repairs or maintenance.

Tines 26 could be present along a length smaller than the active length of the auger 13, but coverage with tines is preferred at least along a significant portion of the auger's active length. For example, tines could be omitted in an end portion of the auger where the material is transferred to an unloading auger.

The shape and length of the tines 26 is not limited to the embodiment shown, nor is the orientation of the tines, but these parameters must be configured so that the tines are able to interact with bulk material in the vicinity of the auger so that bridged material may be loosened by the vibration of the tines.

The beam 25 is preferably mounted directly above the auger 13 as shown in the drawings, but the position of the beam may be a little more to the side in one or the other direction perpendicular to the beam, as long as the required interaction between the tines and the bulk material is enabled. The orientation of the beam 25 is 'essentially parallel' to the auger 13, which includes limited deviations from the mathematically exact parallel orientation, which still enable said required interaction.

The invention further includes alternative ways of coupling the shaker device 31 to the beams 25. The invention is also applicable to other tank auger configurations than the one shown. For example, if the tank comprises a single tank auger 13, a single beam 25 with tines 26 may be mounted parallel to said auger and the shaker device 31 may be mounted directly on the beam 25. In a configuration with two parallel augers, it is also possible to mount a shaker device 31 directly on each of the beams 25.

According to embodiments, the shaker device or devices 31 can be controlled by an operator of the combine, for example by an on/off switch in the driver's cabin. Such control may furthermore include the possibility to control the frequency and/or the amplitude of the vibration generated by the shaker device, for example by a suitable knob or screen interface, so that the operator is able to regulate the impact of the vibration on the material in the tank. This enables the removal of more severe bridging effects by changing the amplitude and/or the frequency of the vibration.

According to other embodiments, the shaker device or devices 31 may be activated automatically when prompted by a signal generated by a control unit included in the harvester. For example, the control unit may be configured to activate the shaker device 31 when the tank augers 13 are activated and deactivate the shaker device when the augers are deactivated. The activation or deactivation of the shaker device could also be linked to the output of a sensor arranged to measure the amount of bulk material in the tank. The control unit could then be configured to activate the shaker device automatically when the tank is filled above a given level and to deactivate the shaker device when the volume in the tank decreases below said level.

The invention is related also to a kit of parts that enables to transform a combine harvester with a classic tank configuration into a harvester according to the invention. Such a kit of parts comprises at least one beam 25 with tines 26 fixed thereto and at least one shaker device 31, first attachment elements for coupling the shaker device or devices to said beam or beams, and second attachment elements for mounting the beam or beams in the tank. The exact number of beams, shaker devices and attachment elements in the kit of parts depends on the specific tank configuration of the conventional harvester. For a conventional harvester as shown in Figure 1 for example, the kit of parts may comprise two beams 25 with tines 26 fixed thereto and one electric vibration motor 31. The first attachment means include the auxiliary beam 30 and screws or other fasteners for fixing it to the beams 25 and additional fastening means for fixing the motor 31 to the auxiliary beam 30. The second attachment means may include supports for mounting the beams 25 in the tank, preferably including also dampening elements for mounting between the supports and the beams 25. According to an embodiment, the conventional harvester is provided with replaceable cover plates arranged above the augers 13, and the beams 25 of the kit of parts are configured to be able to replace said cover plates, so that the harvester can be operated either with the cover plates or with the beams with tines and the vibration motor, depending on the type of crops that are being harvested.

## Claims

1. A combine harvester comprising a grain tank (10) including at least one rotatable tank auger (13) arranged at the bottom of the tank, **characterized in that** :
- the tank further comprises a beam (25) mounted essentially parallel to the auger (13) and provided with multiple tines (26) fixed to the beam (25) and oriented transversely with respect to the beam,
- the position of the beam (25) and the tines (26) relative to the auger is such that the tines are in physical contact with bulk harvested material in the vicinity of the auger when the tank is filled at least to a point where the auger (13) is covered by said bulk material,
- the tank (10) comprises a shaker device (31) coupled to the beam (25) and configured to generate a vibration of the beam (25) and the tines (26).

2. The combine harvester according to claim 1, wherein the tines (26) are regularly spaced from each other in the direction of the beam (25).

3. The combine harvester according to claim 1, wherein the tines (26) extend from the beam (25) on two opposite sides of the beam, and wherein the tines on both sides are arranged symmetrically with respect to the beam.

4. The combine harvester according to any one of the preceding claims, wherein the beam (25) is mounted above the auger (13).

5. The combine harvester according to claim 4, wherein the tines (26) are oriented downward relative to the beam (25).

6. The combine harvester according to any one of the preceding claims, wherein the beam (25) is mounted on two or more supports (35), and wherein damping elements (37) are mounted between the beam and said supports.

7. The combine harvester according to any one of the preceding claims, wherein the tank (10) comprises multiple rotatable tank augers (13) arranged side by side, each auger being provided with a beam (25) and tines (26) mounted relative to said auger in accordance with any one of the preceding claims.

8. The combine harvester according to claim 7, wherein the tank (10) comprises a single shaker device (31) coupled to all the beams (25).

9. The combine harvester according to claim 8, comprising a transverse auxiliary beam (30) fixed to all the beams (25) and wherein the shaker device (31) is fixed to said auxiliary beam (30).

10. The combine harvester according to any one of the preceding claims, wherein the shaker device (31) is an electric vibration motor.

11. The combine harvester according to any one of the preceding claims, wherein the shaker device (31) is configured so that the frequency and/or the amplitude of the vibration generated by the shaker device can be regulated by an operator of the harvester.

12. The combine harvester according to any one of the preceding claims, wherein the shaker device (31) is configured to be active only when the at least one tank auger (13) in the tank (10) is rotating.

13. A kit of parts comprising one or more beams (25) provided with tines (26) and one or more shaker devices (31) as well as first attachment elements for coupling the one or more shaker devices to the one or more beams, and second attachment elements for mounting the one or more beams at the bottom of a grain tank (10) of a combine harvester that is not in accordance with claim 1, to thereby transform said harvester into a harvester according to any one of the preceding claims.

14. A kit of parts according to claim 13, wherein the one or more beams (25) with tines (26) are configured to be mounted in replacement of one or replaceable cover plates mounted at the bottom of the tank of the harvester that is not in accordance with claim 1.
